# FASCICULE DE BREVET EUROPEEN

(11) **EP 3 663 530 B1**
(45) Date de publication et mention de la délivrance du brevet: **05.04.2023**
(21) Numéro de dépôt: 19306555.4
(22) Date de dépôt: 03.12.2019
(51) Int. Cl.: F01D 11/00, F02C 7/04

(54) **SOUFFLANTE COMPRENANT UNE PLATEFORME INTER-AUBES FIXEE**
GEBLÄSE MIT ZWISCHENSCHAUFELPLATFORM
FAN COMPRISING AN INTER-BLADE PLATFORM

(30) Priorité: 07.12.2018 FR 1872555
(43) Date de publication de la demande: 10.06.2020
(73) Titulaire: SAFRAN AIRCRAFT ENGINES, 75015 Paris (FR)
(72) Inventeur: AUBERT, Fabrice Michel François René, 77550 MOISSY-CRAMAYEL (FR); COUSTILLAS, Suzanne Madeleine, 77550 MOISSY-CRAMAYEL (FR); FORESTO, Paul Antoine, 77550 MOISSY-CRAMAYEL (FR); MOZER, Didier Pierre, 77550 MOISSY-CRAMAYEL (FR)
(74) Mandataire: Regimbeau

(56) Documents cités:
- EP-A1- 2 837 773
- EP-A1- 3 163 016
- EP-A2- 2 372 098
- WO-A1-2015/088680

## Description

### DOMAINE DE L'INVENTION

L'invention concerne le domaine général des plateformes inter-aubes dans les soufflantes des turbomachines aéronautiques, notamment lorsque ces plateformes sont réalisées dans un matériau composite comprenant un renfort fibreux densifié par une matrice.

### ARRIERE-PLAN TECHNOLOGIQUE

Une soufflante de turbomachine comprend un disque de rotor portant une pluralité d'aubes dont les pieds sont engagés et retenus dans des rainures sensiblement axiales formées à la périphérie du disque. Ces aubes sont associées à leur extrémité radialement interne à des plateformes inter-aubes, qui sont disposées dans le prolongement du cône d'entrée.

Les plateformes permettent notamment de délimiter, du côté intérieur, la veine annulaire d'entrée d'air dans la soufflante, cette veine étant délimitée du côté extérieur par un carter. Ces plateformes comprennent généralement une base configurée pour délimiter la veine et un caisson s'étendant radialement vers l'intérieur depuis la base afin de permettre un appui de la plateforme sur le disque de soufflante. Le caisson est en outre configuré pour rigidifier la plateforme afin d'assurer la continuité du flux aérodynamique dans la soufflante.

Il est connu de réaliser les plateformes inter-aubes des soufflantes en matériau composite. Le matériau composite comprend généralement un renfort fibreux densifié par une matrice. Selon l'application envisagée, la préforme peut être en fibres de verre, carbone ou céramique et la matrice peut être en un matériau organique (polymère), en carbone ou en céramique. Pour des pièces de forme géométrique relativement complexe, il est également connu de réaliser une structure ou ébauche fibreuse en une seule pièce par tissage tridimensionnel ou multicouches et de mettre en forme la structure fibreuse pour obtenir une préforme fibreuse ayant une forme voisine de celle de la pièce à fabriquer.

Les exigences de performances et d'intégration se traduisent par une capacité à diminuer le rapport de moyeu, qui correspond au rapport entre le rayon interne et le rayon externe de la veine aérodynamique, où le rayon interne correspond à la distance entre l'axe de révolution de la soufflante et la surface de la plateforme qui délimite la veine d'écoulement, au niveau du bord d'attaque de l'aube de soufflante, et le rayon externe correspond à la distance entre l'axe de révolution de la soufflante et le carter de soufflante, au même niveau de l'aube (soit au niveau du bord d'attaque de l'aube, à l'intersection avec la plateforme). Plus le rapport de moyeu est faible, plus la soufflante sera performante.

La réduction de ce rapport de moyeu nécessite bien souvent de devoir réduire l'effort passant à l'amont de la plateforme et à reprendre une partie de cet effort ailleurs sur le disque. A plan de disque, axe de révolution et veine aérodynamique figés, le rapport de moyeu sera fonction de la distance (hauteur) entre la surface de la plateforme qui délimite la veine d'écoulement et la surface radiale du disque de soufflante. En particulier, si cette hauteur augmente, le rapport de moyeu diminue.

Par exemple, le document US 2012/0275921 illustre un disque de soufflante dans lequel la plateforme est reprise à l'amont et à l'aval. Cependant, la fixation à l'amont est volumineuse afin de permettre la reprise des efforts centrifuges ce qui impacte défavorablement le rapport de moyeu.

Le document US 2014/0186187 quant à lui propose de reprendre une partie des efforts centrifuges sur une extension faisant saillie d'une partie aval du disque. Une telle configuration permet de réduire l'encombrement de la fixation en partie amont, et donc de réduire le rapport de moyeu. Toutefois, cette configuration risque de dégrader l'écoulement de l'air par la présence de cavités ou d'une mauvaise maîtrise de l'aspect de surface.

Il a également été proposé dans le document FR 3 029 563 au nom de la Demanderesse de monter la plateforme sur un pion usiné dans la masse du disque. Toutefois, plus la corde de l'aube de soufflante sera grande, plus la courbure de l'aube sera prononcée et plus le jeu nécessaire au montage axial de l'aube de soufflante sera important. Cette configuration nécessite donc un jeu suffisant, qui peut s'avérer trop important à combler selon les configurations pour permettre un montage axial de la plateforme, qui se traduit par une ouverture des jeux au niveau des bords de fuite extrados des aubes de soufflante.

Enfin, il peut s'avérer difficile de positionner avec précision les plateformes inter-aubes actuelles par rapport au disque de moyeu. C'est en particulier le cas lorsque la plateforme est reprise à l'amont et à l'aval, car la plateforme se plaque sur ses points de fixation sous l'effet des efforts centrifuges, créant ainsi des risques de dégradation des étanchéités, de création de marche dans la veine d'écoulement secondaire et une perturbation de l'écoulement dans la soufflante et en entrée du compresseur basse pression ou du booster. Or, le manque de précision de la fixation des plateformes inter-aubes par rapport au disque de soufflante porte préjudice au centrage du cône d'entrée.

Le document EP2732098 décrit une soufflante conforme au préambule de la revendication 1.

Le document EP3163016 décrit une soufflante comprenant un cône d'entré fixé sur le disque de soufflante par l'intermédiaire d'une attache.

### RESUME DE L'INVENTION

Un objectif de l'invention est donc de proposer une soufflante présentant un rapport de moyeu le plus faible possible, dans laquelle les plateformes inter-aubes peuvent être fixées facilement au disque de soufflante sans dégrader la veine d'écoulement quel que soit leur matériau, tout en limitant les jeux nécessaires pour le montage des aubes de soufflante et en permettant un centrage précis du cône d'entrée.

Pour cela, l'invention propose une soufflante de turbomachine telle que définie dans la revendication indépendante 1.

Certaines caractéristiques préférées mais non limitatives de la soufflante décrite ci-dessus sont les suivantes, prises individuellement ou en combinaison :
- la virole de blocage est rapportée et sur l'extrémité amont de la plateforme par l'intermédiaire d'un système de fixation qui s'étend radialement à l'extérieur de l'ergot.
- l'extrémité amont de la plateforme comprend une paroi configurée pour s'étendre en regard de la face amont du disque de soufflante, un premier orifice est formé dans la paroi de l'extrémité amont, un deuxième orifice est formé la virole de blocage, et la soufflante comprend en outre un pion configuré pour pénétrer dans le premier orifice et dans le deuxième orifice de sorte à bloquer la plateforme par rapport au disque de soufflante par l'intermédiaire de la virole de blocage.
- la soufflante comprend en outre une douille logée au moins partiellement dans le premier orifice, ladite douille étant configurée pour prendre appui contre une face amont de l'extrémité amont et le pion étant logé au moins partiellement dans la douille.
- la soufflante comprend en outre un jonc d'arrêt enfilé sur le pion, ledit jonc d'arrêt s'étendant entre la douille et le pion, et/ou un écrou enfilé sur le pion, ledit écrou étant fixé sur l'extrémité amont de la plateforme.
- un sillon est formé dans la face amont de l'extrémité amont, ledit sillon étant configuré pour coopérer avec une tête de la douille.
- le disque de soufflante comprend une bride coudée comportant une branche axiale s'étendant axialement depuis sa face amont et une branche radiale s'étendant radialement depuis la branche axiale, la virole de blocage comprend une paroi coudée comprenant un brin axial s'étendant axialement depuis l'anneau, un brin radial s'étendant radialement depuis le brin axial et un doigt s'étendant dans le prolongement du brin axial, le doigt étant configuré pour venir en butée radiale contre la branche axiale tandis que le brin radial est configuré pour venir en butée axiale contre la branche radiale.
- la plateforme inter-aubes comprend une base et au moins un raidisseur s'étendant radialement depuis la base et configuré pour coopérer avec le disque de soufflante.
- la soufflante comprend en outre : une chape s'étendant radialement depuis la face radiale du disque et dans laquelle est formé un troisième orifice, et un pion supplémentaire, le raidisseur comprenant une patte dans laquelle est formé un quatrième orifice traversant et le pion supplémentaire étant configuré pour pénétrer dans le troisième orifice et dans le quatrième orifice de sorte à bloquer la plateforme par rapport au disque de soufflante.
- la base et le raidisseur sont formés intégralement et en une seule pièce.
- la plateforme inter-aube est réalisée dans un matériau composite comprenant un renfort fibreux densifié par une matrice polymère.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 illustre un exemple de réalisation d'une soufflante conforme à un mode de réalisation de l'invention.
La figure 2 est une vue en perspective et en détail d'un exemple de réalisation d'une plateforme inter-aubes conforme à l'invention, en cours de fixation sur un disque de soufflante.
La figure 3 est une vue en coupe de la plateforme inter-aubes et du disque de soufflante de la figure 2 lorsque la plateforme inter-aubes est fixée sur le disque de soufflante.
La figure 4a est une vue en détail de la figure 3 représentant la fixation de la plateforme inter-aubes sur le disque de soufflante.
La figure 4b est une vue en détail d'une variante de réalisation de la fixation de la plateforme inter-aubes sur le disque de soufflante.
La Figure 5 est une vue schématique d'un exemple d'ébauche fibreuse tissée tridimensionnelle selon une forme de réalisation de l'invention.

### DESCRIPTION DETAILLEE D'UN MODE DE REALISATION

Dans la présente demande, l'amont et l'aval sont définis par rapport au sens d'écoulement normal du gaz dans la soufflante 1 à travers la turbomachine. Par ailleurs, on appelle axe de révolution de la soufflante 1 turbomachine, l'axe X de symétrie radiale de la soufflante 1. La direction axiale correspond à la direction de l'axe X de la soufflante 1, et une direction radiale est une direction perpendiculaire à cet axe et passant par lui. De même, un plan axial est un plan contenant l'axe X de la soufflante 1 et un plan radial est un plan perpendiculaire à cet axe X et passant par lui. Sauf précision contraire, interne (ou intérieur) et externe (ou extérieur), respectivement, sont utilisés en référence à une direction radiale de sorte que la partie ou la face interne (i.e. radialement interne) d'un élément est plus proche de l'axe X que la partie ou la face externe (i.e. radialement externe) du même élément.

Une soufflante 1 de turbomachine comprend un disque 10 de soufflante présentant une face amont 12 et une face radiale 14. Le disque 10 de soufflante porte une pluralité d'aubes 2 de soufflantes, associées à des plateformes 20 inter-aubes.

Les aubes 2 sont engagées dans des rainures axiales 15 formées dans la face radiale 14 du disque 10 de soufflante 1. Optionnellement, le disque 10 de soufflante peut comprendre une tôle de protection sacrificielle, ou clinquant. De manière connue en soi, la tôle de protection a pour fonction, en utilisation, de protéger la face radiale 14 du disque 10 en se détériorant avant le disque 10.

Chaque aube 2 présente un pied, engagé dans l'une des rainures 15, une tête (ou sommet), un bord d'attaque 3 et un bord de fuite. Le bord d'attaque 3 est configuré pour s'étendre en regard de l'écoulement des gaz entrant dans la turbomachine. Il correspond à la partie antérieure d'un profil aérodynamique qui fait face au flux d'air et qui divise l'écoulement d'air en un écoulement d'intrados et en un écoulement extrados. Le bord de fuite quant à lui correspond à la partie postérieure du profil aérodynamique, où se rejoignent les écoulements intrados et extrados.

Les aubes 2 sont associées à leur extrémité radialement interne à des plateformes 20 inter-aubes, qui sont disposées dans le prolongement d'un cône d'entrée 40.

Chaque plateforme 20 présente une extrémité amont 21, configurée pour s'étendre au niveau de la face amont 12 du disque 10 de soufflante, et une extrémité aval 21' configurée pour venir en regard d'une pièce s'étendant en aval de la soufflante 1.

Généralement, la pièce en aval de la soufflante 1 comprend une virole interne d'un IGV (acronyme anglais pour Inlet Guide Vane, c'est-à-dire le premier étage stator du booster dans le corps primaire d'une turbomachine) ou, en variante, un espaceur tournant qui est formé d'une bride annulaire s'étendant entre la soufflante 1 et la virole interne de l'IGV et qui tourne à la même vitesse que le disque 10 de soufflante 1. L'extrémité aval 21' de la plateforme 20 et cette pièce (qu'il s'agisse de la virole interne de l'IGV ou de l'espaceur tournant) peuvent donc être conformées de manière à s'étendre dans le prolongement l'une de l'autre de sorte à limiter les cavités en entrée du corps primaire de la turbomachine susceptibles de perturber l'écoulement primaire. En variante, dans le cas où la pièce est l'espaceur tournant, l'extrémité aval 21' de la plateforme 20 peut être configurée pour venir en appui contre la pièce.

La soufflante 1 comporte en outre une virole de blocage 30, rapportée et fixée d'une part sur l'extrémité amont 21 de la base de la plateforme 20 et d'autre part sur la face amont 12 du disque 10 de soufflante 1.

Afin de permettre le centrage axial et radial du cône d'entrée 40 de la soufflante 1, la virole de blocage 30 comprend un anneau 31 s'étendant radialement par rapport à l'axe X et un ergot 32. L'ergot 32 s'étend axialement depuis l'anneau 31 et est configuré pour recevoir un bord aval du cône d'entrée 40 et pour former une butée axiale pour ce bord aval. Par ailleurs, l'anneau 31 est configuré pour former une butée radiale pour le bord aval du cône d'entrée 40. De la sorte, les positions radiale et axiale du cône d'entrée 40 ne dépendent plus de la position de l'extrémité amont 21 de la plateforme 20, facilitant ainsi la maîtrise de la chaîne de cote.

Dans une forme de réalisation, le disque 10 de soufflante 1 comprend une bride coudée 16 comportant une branche axiale 17 s'étendant axialement depuis sa face amont 12 et une branche radiale 18 s'étendant radialement vers l'intérieur depuis la branche axiale 17.

Par ailleurs, la virole de blocage 30 comprend une paroi coudée 34 comprenant un brin axial 35 s'étendant axialement vers l'aval depuis l'anneau 31 et un brin radial 36 s'étendant radialement vers l'intérieur depuis le brin axial 35. Le brin axial 35 se prolonge vers l'aval au-delà du brin radial 36 par un doigt 37. Dans une variante de réalisation non visible sur les figures, la branche radiale 18 peut s'étendre radialement vers l'extérieur depuis la branche axiale 17, auquel cas le brin radial 36 s'étend également vers l'extérieur depuis le brin axial 35, le doigt 37 prenant alors appui sur la face inférieure de la branche axiale 17.

Afin d'améliorer encore la maîtrise de la chaîne de cote et donc le centrage du cône d'entrée 40, le doigt 37 est configuré pour venir en butée radiale contre la branche axiale 17 de la bride coudée 16 du disque 10 de soufflante 1 tandis que le brin radial 36 de la paroi coudée 34 de la virole de blocage 30 est configuré pour venir en butée axiale contre la branche radiale 18 de la bride coudée 16 du disque 10 de soufflante 1. En effet, la bride coudée 16 du disque 10 de soufflante 1 et la paroi coudée 34 de la virole de blocage 30 peuvent être usinés avec précision de sorte que la position de l'interface entre la branche radiale 18 de la bride coudée 16 et du brin axial 35 de la paroi coudée 34, d'une part et l'interface entre le doigt 37 et la branche axiale 17 de la bride coudée 16 peuvent être maîtrisées et déterminées avec précision. Il en découle que la position de l'ergot 32 et du doigt 37, et donc le centrage du cône d'entrée 40, peuvent être maîtrisée radialement et axialement.

La virole de blocage 30 est annulaire. L'anneau 31, l'ergot 32 et la paroi coudée 34 présentent donc une symétrie axiale autour de l'axe X. Le cas échéant, l'anneau 31, l'ergot 32 et/ou la paroi coudée 34 peuvent être discontinus.

De même, la bride coudée 16 du disque 10 est de symétrie axiale autour de l'axe X, et peut le cas échéant être discontinue.

De préférence, la virole de blocage 30 est métallique, par exemple en titane, typiquement en choisissant le même matériau que celui du disque 10.

Afin de fixer la plateforme 20 en position par rapport au disque 10 de soufflante 1, l'extrémité amont 21 de la base de la plateforme 20 peut comprendre une paroi configurée pour s'étendre en regard de la face amont 12 du disque 10 de soufflante 1. Par ailleurs, un premier orifice 22 est formé dans la paroi de l'extrémité amont 21 et un deuxième orifice 33 est formé la virole de blocage 30. Enfin, la soufflante 1 comprend un pion 3 configuré pour pénétrer dans le premier orifice 22 et dans le deuxième orifice 33 de sorte à bloquer la plateforme 20 par rapport au disque 10 de soufflante 1 par l'intermédiaire de la virole de blocage 30.

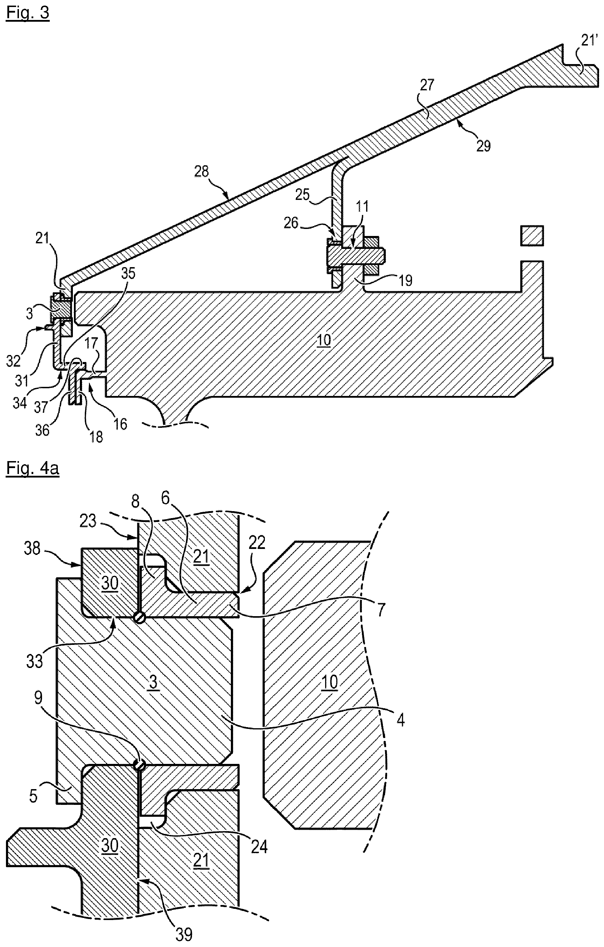

Selon une forme de réalisation illustrée sur la figure 4a, la plateforme 20 peut être fixée sur la virole de blocage 30 à l'aide d'un système de fixation comprenant le pion 3, une douille 6 et un jonc d'arrêt 9. Plus précisément, la douille 6 comprend un corps 7 cylindrique, par exemple cylindrique de révolution, et une tête 8 traversés par un passage central. Le pion 3 comprend un corps 4 cylindrique, par exemple cylindrique de révolution, configuré pour être inséré avec ajustement dans le passage central de la douille 6, et une tête 5 configurée pour venir en appui contre l'anneau 31 de la virole de blocage 30. Enfin, le jonc d'arrêt 9a est sensiblement annulaire et est configuré pour être enfilé avec ajustement sur le corps 4 cylindrique du pion 3.

La plateforme 20 peut alors être fixée comme suit sur la virole de blocage 30 : tout d'abord, la douille 6 est introduite dans le premier orifice 22 formé dans l'extrémité amont 21 sorte que sa tête 8 vienne en butée contre une face amont 23 de l'extrémité amont 21. Le cas échéant, un sillon 24 dont la forme et les dimensions correspondent à la forme et aux dimensions de la douille 6 peut être réalisé dans la face amont 23 de l'extrémité amont 21, autour du premier orifice 22, afin de former un siège pour la douille 6. Le pion 3 peut ensuite être inséré dans le deuxième orifice 33 de la virole de blocage 30, depuis la face amont 38 de l'anneau 31, jusqu'à ce que sa tête 5 vienne en butée contre ladite face amont 38. Le jonc d'arrêt 9a peut alors être enfilé sur le corps 4 cylindrique du pion 3, jusqu'à ce qu'il vienne en butée contre une face aval 39 de l'anneau 31. Enfin, le pion 3 est introduit dans la douille 6 en passant par la tête 8 de la douille 6, jusqu'à ce que le jonc d'arrêt 9a vienne en contact avec la tête 8 de la douille 6. Dans cette configuration, la face aval 39 de l'anneau 31 de la virole de blocage 30 est donc en contact surfacique avec la face amont 23 de l'extrémité amont 21 de la plateforme 20, ce qui bloque axialement et radialement la plateforme 20 par rapport à la virole de blocage 30.

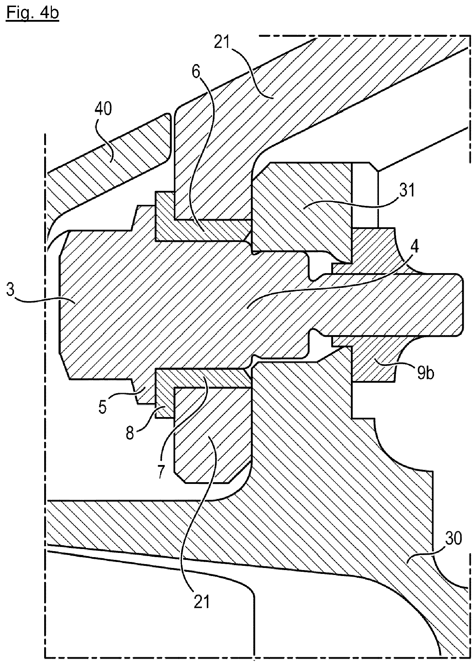

Dans une variante de réalisation (figure 4b), le système de fixation comprend un écrou 9b à la place ou en plus du jonc d'arrêt 9a afin de fixer la plateforme 20 sur la virole de blocage 30. Plus précisément, Le pion 3 est alors centré par le corps cylindrique 7 de la douille 6 et par la virole de blocage 30 avant d'être engagé dans l'écrou 9b permettant ainsi un positionnement précis de l'ensemble.

La plateforme 20 peut alors être fixée comme suit sur la virole de blocage 30 comme suit : tout d'abord, la douille 6 est introduite dans le premier orifice 22 formé dans l'extrémité amont 21 sorte que sa tête 8 vienne en butée contre une face amont 23 de l'extrémité amont 21. Le cas échéant, un sillon 24 dont la forme et les dimensions correspondent à la forme et aux dimensions de la douille 6 peut être réalisé dans la face amont 23 de l'extrémité amont 21, autour du premier orifice 22, afin de former un siège pour la douille 6. La face amont 38 de l'anneau 31 peut ensuite être placée contre une face aval de l'extrémité amont 21 de la plateforme 20, de sorte que son deuxième orifice 33 soit sensiblement coaxial avec le premier orifice 22. Le pion 3 peut ensuite être inséré dans le corps 7 de la douille 6 de sorte à traverser le premier orifice 22 et le deuxième orifice 33, jusqu'à ce que sa tête 5 vienne en butée contre la tête de la douille. Enfin, l'écrou 9a est enfilé sur l'extrémité libre du corps cylindrique 4 du pion 4 afin de le bloquer en position puis serti sur l'extrémité amont 21 de la plateforme 20. Dans cette configuration, la face amont de l'extrémité amont 21 de la plateforme 20 est donc en contact surfacique avec la tête 8 de la douille 6 et sa face aval 39 est en contact surfacique avec la face amont 38 de l'anneau 31 de la virole de blocage 30, ce qui bloque axialement et radialement la plateforme 20 par rapport à la virole de blocage 30.

La plateforme 20 peut en outre être fixée sur le disque 10 de soufflante 1 en aval de la face amont 12 du disque 10.

La plateforme 20 peut être formée intégralement et en une seule pièce, par exemple dans un matériau composite comprenant un renfort fibreux densifié par une matrice, ou en variante en métal.

Le renfort fibreux peut être formé à partir d'une préforme fibreuse obtenue par tissage tridimensionnel avec épaisseur évolutive. Il peut notamment comprendre des fibres en carbone, en verre, aramide et/ou céramique. La matrice quant à elle est typiquement une matrice polymère, par exemple époxyde, bismaléimide ou polyimide. L'aube 1 est alors formée par moulage au moyen d'un procédé d'injection sous vide de résine du type RTM (pour « Resin Transfer Moulding), ou encore VARRTM (pour Vacuum Resin Transfer Molding).

Dans un premier exemple de réalisation, la plateforme 20 peut, de manière conventionnelle, présenter une section en forme de π avec une base et deux flancs formant raidisseurs qui s'étendent à partir d'une face de la base et servent à rigidifier la plateforme 20 de sorte à éviter tout déplacement de celle-ci sous l'effort centrifuge dû à la vitesse de rotation de la soufflante 1. Le cas échéant, afin de renforcer la résistance de la plateforme 20 aux efforts centrifuges, la plateforme 20 peut en outre comprendre un fond reliant les extrémités libres des flancs pour former un caisson fermé sous la base de la plateforme 20.

On pourra notamment se référer au document FR 2 898 977 au nom de la Demanderesse, qui décrit un exemple de réalisation d'une telle plateforme 20 réalisée en une seule pièce en matériau composite.

Dans un deuxième exemple de réalisation illustré sur les figures, la plateforme 20 comprend une patte 25 qui est fixée sur une chape 19 s'étendant radialement de la face radiale 14 du disque 10 de soufflante 1.

Pour cela, la chape 19 est formée intégralement et en une seule pièce avec le disque 10 de soufflante 1, à distance de la face amont 12, par exemple par usinage. Un troisième orifice 11 est formé dans la chape 19.

Par ailleurs, la plateforme 20 comprend une base 27 présentant une première surface 28 configurée pour délimiter radialement à l'intérieur la veine d'écoulement dans la soufflante 1 et une deuxième surface 29 opposée à la première surface 28, ainsi que la patte 25 s'étendant radialement par rapport à l'axe de révolution X du côté de la deuxième surface 29 de la base 27. Un quatrième orifice 26 est formé dans la patte 25.

La patte 25 est configurée pour venir en contact avec la chappe lorsque la plateforme 20 est fixée sur le disque 10 de soufflante 1, de sorte que le quatrième orifice 26 de la patte 25 soit coaxial avec le troisième orifice 11 de la chape 19. Un pion 13 peut alors être insérée dans le troisième orifice 11 et dans le quatrième orifice 26 afin de fixer la patte 25 sur la chape 19.

Dans une forme de réalisation, la patte 25 et la base 27 peuvent être réalisées dans un matériau composite comprenant une renfort fibreux densifié par une matrice polymère. Elles sont alors formées intégralement et en une seule pièce à partir d'une même préforme fibreux.

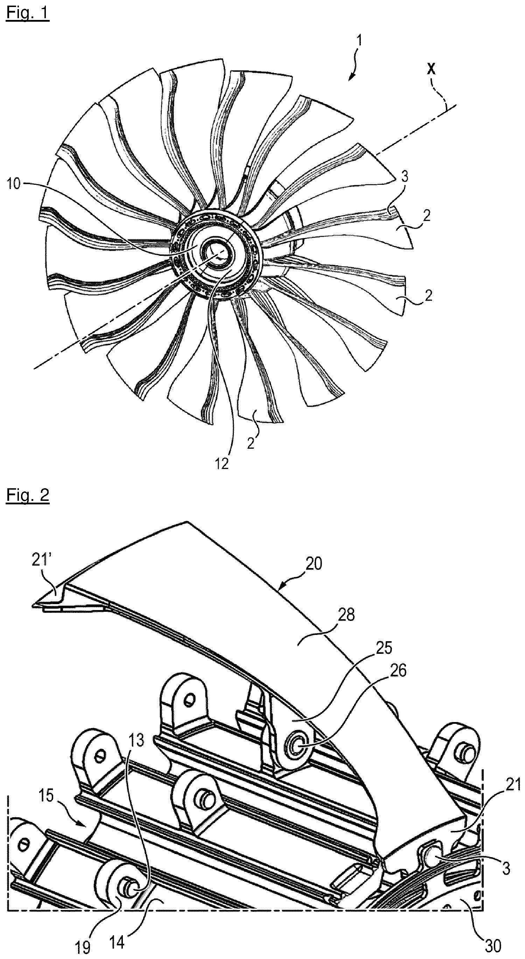

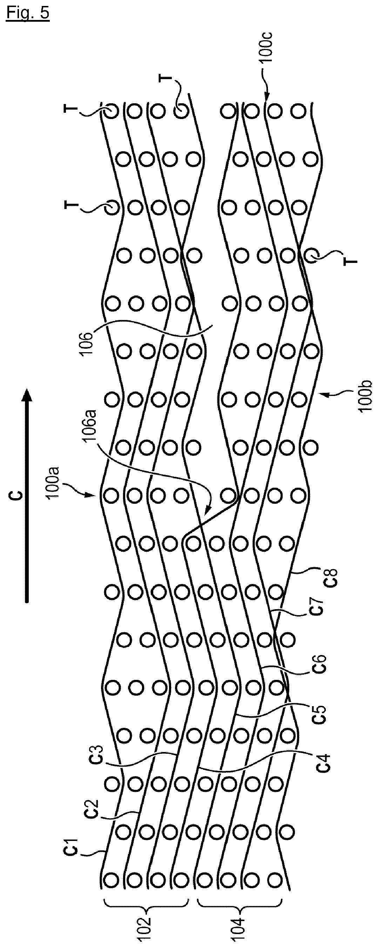

Le renfort fibreux peut être formé à partir d'une préforme fibreuse obtenue par tissage tridimensionnel avec épaisseur évolutive. Afin de réaliser en une seule pièce la base 27 et la patte 25, une déliaison ouverte peut être formée de manière à permettre, à partir d'une même préforme tridimensionnelle, de réaliser ces deux parties de la plateforme 20. On pourra notamment se référer à la Figure 5, qui représente schématiquement un plan de chaîne d'une ébauche fibreuse tissée tridimensionnelle à partir de laquelle une préforme fibreuse de plateforme 20 peut être mise en forme, avant injection de résine ou densification par une matrice et usinage éventuel, afin d'obtenir une plateforme 20 de soufflante 1 en matériau composite telle que celle illustrée sur les figures 1 à 4. Par tissage tridimensionnel, on comprendra que les fils de chaîne C₁-C₈ suivent des trajets sinueux afin de lier entre eux des fils de trame T appartenant à des couches de fils de trame différentes exception faite de déliaisons 106, étant noté qu'un tissage tridimensionnel, notamment à armure interlock, peut inclure des tissages 2D en surface. Différentes armures de tissage tridimensionnel peuvent être utilisées, telles que des armures interlock, multi-satin ou multi-voile, par exemple, comme décrit notamment dans le document WO 2006/136755. Sur la figure 5, l'ébauche fibreuse présente deux surfaces opposées 100a, 100b et comprend une première partie 102 et une deuxième partie 104. Ces deux parties 102, 104 forment respectivement une première et une deuxième partie de l'épaisseur de l'ébauche fibreuse entre ses surfaces opposées 100a, 100b.

Chaque partie 102, 104 de l'ébauche fibreuse comprend une pluralité de couches superposées de fils de trame T, quatre dans l'exemple illustré, le nombre de fils de trame T pouvant être tout nombre souhaité au moins égal à deux en fonction de l'épaisseur désirée. En outre, les nombres de couches de fils de trame dans les parties 102 et 104 pourront être différents les uns des autres. Les fils de trame T sont disposés en colonnes comprenant chacune des fils de trame T de la première et de la deuxième partie 102, 104 de l'ébauche fibreuse. Sur une portion de la dimension de l'ébauche fibreuse en direction chaîne C, la première partie 102 et la deuxième partie 104 de l'ébauche fibreuse sont séparées totalement l'une de l'autre par une déliaison ouverte 106 qui s'étend à partir d'une limite amont 106a jusqu'à un bord aval 100c de l'ébauche fibreuse. Par déliaison ouverte 106, on entend ici une zone fermée à une extrémité et ouverte à une extrémité opposée qui n'est pas traversée par des fils de chaîne C₁-C₈ liant entre eux des fils de trame T de couches appartenant respectivement à deux des couches, dans l'exemple ici la deuxième partie 104 et la deuxième partie 104 de l'ébauche fibreuse.

Hormis au niveau de la déliaison ouverte 108, les couches de fils de trame T sont liées entre elles par des fils de chaîne d'une pluralité de couches de fils de chaîne C₁ à C₈. Dans l'exemple plus précisément illustré sur la figure 5, un même premier fil de chaîne C₄ lie entre elles des couches de fils de trame T de la première partie 102 de l'ébauche fibreuse adjacentes à la déliaison 106 et des couches de fils de trame T de la deuxième partie 102 de l'ébauche fibreuse au-delà de la déliaison 106, c'est-à-dire devant la limite amont 106a. Bien entendu, cette liaison pourrait être réalisée par plusieurs premiers fils de chaîne.

A l'inverse, un même deuxième fil de chaîne C₅ lie entre elles des couches de fils de trame T de la deuxième partie 104 de l'ébauche fibreuse adjacentes à la déliaison ouverte 106 et des couches de fils de trame T de la première partie 102 de l'ébauche fibreuse au-delà de la déliaison fermée. Bien entendu, cette liaison pourrait être réalisée par plusieurs deuxièmes fils de chaîne. Ainsi, le trajet du fil de chaîne C₅ et celui du fil de chaîne C₆ se croisent au niveau de la limite amont 106a de la déliaison ouverte 106.

La préforme fibreuse comprend donc, dans le sens des fils de chaîne C, une première portion dans laquelle la première partie 102 et la deuxième partie 104 sont fixées solidairement de manière à former, après injection de la matrice, la partie aval de la plateforme 20, et une deuxième portion s'étendant entre la limite amont 106a de la déliaison 106 et le bord aval 100c de la préforme, destinée à former la partie amont de la base 27 et la patte 25. Pour cela, il suffit, après tissage, de séparer les deux parties 102 et 104 et de leur donner la forme désirée (et plus particulièrement de former un angle entre la portion isolée de la première partie 102 de la préforme destinée à former la base 27 et la portion isolée de la deuxième partie 104 de la préforme destinée à former la patte 25), puis de placer la préforme dans la configuration voulue dans un moule adapté afin d'y injecter la matrice sous vide, conformément aux procédés habituellement utilisés (par exemple par procédé du type RTM ou VARRTM.

Le quatrième orifice 26 peut ensuite être réalisé par usinage dans la patte 25.

L'épaisseur de la partie amont de la base 27 et de la patte 25 de la plateforme 20 peut être déterminée en choisissant le nombre de couches dans la première partie 102 et la deuxième partie 104, respectivement, ainsi que le nombre et le diamètre (tex) des torons dans les fils de chaîne et de trame dans chacune de ces parties. L'épaisseur de la partie amont peut donc être différente de celle de la partie aval.

Après fixation de la plateforme 20 sur le disque 10 de soufflante 1 grâce à la virole de blocage 30 et le caisson fermé ou la patte 25, le cône d'entrée 50 est rapporté et fixé sur la virole de blocage 30, de sorte à s'étendre dans le prolongement de la base 27 de la plateforme 20 en limitant les cavités susceptibles de perturber l'écoulement en entrée de la soufflante 1.

Pour cela, afin d'assurer le centrage axial et radial du cône d'entrée 40, son extrémité aval est mise en butée axiale contre l'anneau 31 et en butée radiale contre l'ergot 32 de la virole de blocage 30.

Dans une forme de réalisation, lorsque le cône d'entrée 40 est en position dans la soufflante 1, il recouvre l'extrémité amont 21 de la plateforme 20 et la virole de blocage 30.

## Revendications

1. Soufflante (1) de turbomachine présentant un axe de révolution (X) et comprenant :
- un disque (10) de soufflante (1) présentant une face amont (12) et une face radiale (14) configurée pour recevoir une série d'aubes (2) de soufflante (1),
- une plateforme inter-aubes (20) comprenant une extrémité amont (21), une base (27) et au moins un raidisseur (25) s'étendant radialement depuis la base (27) et configuré pour coopérer avec le disque (10) de soufflante (1),
- un cône d'entrée (40),
- une virole de blocage (30) coopérant avec la plateforme qui est rapportée et fixée d'une part sur l'extrémité amont (21) de la plateforme et d'autre part sur la face amont (12) du disque (10) de soufflante (1), la virole de blocage (30) comprenant un anneau (31) radial et un ergot (32), s'étendant axialement depuis l'anneau (31) radial et configuré pour former une butée radiale pour le cône d'entrée (40), la soufflante étant **caractérisée en ce qu'**elle comprend
- une chape (19) s'étendant radialement depuis la face radiale (14) du disque (10) et dans laquelle est formé un orifice (11),
la soufflante comprend une patte dans laquelle est formé un orifice (26) traversant et **en ce qu'**elle comprend en outre un pion (13) configuré pour pénétrer dans l'orifice (11) formé dans la chape (19) et dans l'orifice (26) traversant formé dans la patte de sorte à bloquer la plateforme (20) par rapport au disque (10) de soufflante (1).

2. Soufflante selon la revendication 1, dans laquelle la virole de blocage (30) est rapportée sur l'extrémité amont (21) de la plateforme par l'intermédiaire d'un système de fixation (3) qui s'étend radialement à l'extérieur de l'ergot (32).

3. Soufflante (1) selon l'une des revendications 1 ou 2, dans laquelle :
- l'extrémité amont (21) de la plateforme (20) comprend une paroi configurée pour s'étendre en regard de la face amont (12) du disque (10) de soufflante (1),
- un premier orifice (22) est formé dans la paroi de l'extrémité amont (21),
- un deuxième orifice (33) est formé dans la virole de blocage (30), et
la soufflante (1) comprend en outre un pion (3) configuré pour pénétrer dans le premier orifice (22) et dans le deuxième orifice (33) de sorte à bloquer la plateforme (20) par rapport au disque (10) de soufflante (1) par l'intermédiaire de la virole de blocage (30).

4. Soufflante (1) selon la revendication 3, comprenant en outre une douille (6) logée au moins partiellement dans le premier orifice (22), ladite douille (6) étant configurée pour prendre appui contre une face amont (23) (23) de l'extrémité amont (21) et le pion (3) étant logé au moins partiellement dans la douille (6).

5. Soufflante (1) selon la revendication 4, comprenant en outre un jonc d'arrêt (9a) enfilé sur le pion (3), ledit jonc d'arrêt (9a) s'étendant entre la douille (6) et le pion (3), et/ou un écrou (9a) enfilé sur le pion (3), ledit écrou (9b) étant fixé sur l'extrémité amont (21) de la plateforme (20).

6. Soufflante (1) selon l'une des revendications 4 ou 5, dans laquelle un sillon (24) est formé dans la face amont (23) de l'extrémité amont (21), ledit sillon (24) étant configuré pour coopérer avec une tête de la douille (6).

7. Soufflante (1) selon l'une des revendications 1 à 6, dans laquelle :
- le disque (10) de soufflante (1) comprend une bride coudée (16) comportant une branche axiale (17) s'étendant axialement depuis sa face amont (12) et une branche radiale (18) s'étendant radialement depuis la branche axiale (17),
- la virole de blocage (30) comprend une paroi coudée (34) comprenant un brin axial (35) s'étendant axialement depuis l'anneau (31), un brin radial (36) s'étendant radialement depuis le brin axial (35) et un doigt (37) s'étendant dans le prolongement du brin axial (35), le doigt (37) étant configuré pour venir en butée radiale contre la branche axiale (17) tandis que le brin radial (36) est configuré pour venir en butée axiale contre la branche radiale (18).

8. Soufflante (1) selon l'une des revendications 1 à 7, dans laquelle la base (27) et le raidisseur (25) sont formés intégralement et en une seule pièce.

9. Soufflante (1) selon l'une des revendications 1 à 8, dans laquelle la plateforme (20) inter-aube est réalisée dans un matériau composite comprenant un renfort fibreux densifié par une matrice polymère.

## Patentansprüche

1. Fan (1) eines Turbotriebwerks, der eine Rotationsachse (X) aufweist und Folgendes umfasst:
- eine Fanscheibe (10), die eine stromaufwärts gelegene Seite (12) und eine radiale Seite (14) aufweist, die konfiguriert ist, um eine Reihe von Schaufeln (2) eines Fans (1) aufzunehmen,
- eine Zwischenschaufelplattform (20), die ein stromaufwärts gelegenes Ende (21), eine Basis (27) und mindestens eine Versteifung (25) umfasst, die sich radial aus der Basis (27) erstreckt und konfiguriert ist, um mit der Fanscheibe (10) zusammenzuwirken,
- einen Einlaufkegel (40),
- einen Klemmring (30), der mit der Plattform zusammenwirkt, der beigebracht ist, und einerseits an dem stromaufwärts gelegenen Ende (21) der Plattform, und andererseits an der stromaufwärts gelegenen Seite (12) der Fanscheibe (10) befestigt ist, wobei der Klemmring (30) einen radialen Ring (31) und einen Nocken (32) umfasst, der sich axial aus dem radialen Ring (31) erstreckt, und konfiguriert ist, um einen radialen Anschlag für den Einlaufkegel (40) zu bilden, wobei der Fan **dadurch gekennzeichnet ist, dass** er umfasst
- einen Gelenkkopf (19), der sich radial aus der radialen Seite (14) der Scheibe (10) erstreckt, und in dem eine Öffnung (11) gebildet ist,
der Fan eine Lasche umfasst, in der eine Durchgangsöffnung (26) gebildet ist, und dadurch, dass er weiter einen Stift (13) umfasst, der konfiguriert ist, um in die Öffnung (11), die in dem Gelenkkopf (19) gebildet ist, und in die Durchgangsöffnung (26), die in der Lasche gebildet ist, einzudringen, um die Plattform (20) in Bezug auf die Fanscheibe (10) zu klemmen.

2. Fan nach Anspruch 1, wobei der Klemmring (30) an dem stromaufwärts gelegenen Ende (21) der Plattform anhand eines Befestigungssystems (3) beigebracht ist, das sich radial außerhalb des Nockens (32) erstreckt.

3. Fan (1) nach einem der Ansprüche 1 oder 2, wobei:
- das stromaufwärts gelegene Ende (21) der Plattform (20) eine Wand umfasst, die konfiguriert ist, um sich gegenüber der stromaufwärts gelegenen Seite (12) der Fanscheibe (10) zu erstrecken,
- eine erste Öffnung (22) in der Wand des stromaufwärts gelegenen Endes (21) gebildet ist,
- eine zweite Öffnung (33) in dem Klemmring (30) gebildet ist, und
der Fan (1) weiter einen Stift (3) umfasst, der konfiguriert ist, um derart in die erste Öffnung (22) und in die zweite Öffnung (33) einzudringen, um die Plattform (20) in Bezug auf die Fanscheibe (10) anhand des Klemmrings (30) zu klemmen.

4. Fan (1) nach Anspruch 3, weiter eine Hülse (6) umfassend, die mindestens teilweise in der ersten Öffnung (22) liegt, wobei die Hülse (6) konfiguriert ist, um sich an eine stromaufwärts gelegene Seite (23) des stromaufwärts gelegenen Endes (21) anzulegen, und wobei der Stift (3) mindestens teilweise in der Hülse (6) liegt.

5. Fan (1) nach Anspruch 4, weiter einen Sprengring (9a) umfassend, der auf den Stift (3) aufgezogen ist, wobei sich der Sprengring (9a) zwischen der Hülse (6) und dem Stift (3) erstreckt, und/oder eine Mutter (9a), die auf den Stift (3) aufgezogen ist, wobei die Mutter (9b) an dem stromaufwärts gelegenen Ende (21) der Plattform (20) befestigt ist.

6. Fan (1) nach einem der Ansprüche 4 oder 5, wobei eine Furche (24) in der stromaufwärts gelegenen Seite (23) des stromaufwärts gelegenen Endes (21) gebildet ist, wobei die Furche (24) konfiguriert ist, um mit dem Kopf der Hülse (6) zusammenzuwirken.

7. Fan (1) nach einem der Ansprüche 1 bis 6, wobei:
- die Fanscheibe (10) einen abgewinkelten Flansch (16) umfasst, der eine axiale Verzweigung (17), die sich axial aus seiner stromaufwärts gelegenen Seite (12) erstreckt, und eine radiale Verzweigung (18) beinhaltet, die sich radial aus der axialen Verzweigung (17) erstreckt,
- der Klemmring (30) eine abgewinkelte Wand (34) umfasst, die einen axialen Strang (35), der sich axial aus dem Ring (31) erstreckt, einen radialen Strang (36), der sich radial aus dem axialen Strang (35) erstreckt, und einen Finger (37) umfasst, der sich in der Erweiterung des axialen Strangs (35) erstreckt, wobei der Finger (37) konfiguriert ist, um auf radialen Anschlag an die axiale Verzweigung (17) zu kommen, während der radiale Strang (36) konfiguriert ist, um auf axialen Anschlag an die radiale Verzweigung (18) zu kommen.

8. Fan (1) nach einem der Ansprüche 1 bis 7, wobei die Basis (27) und die Versteifung (25) integral und in einem Stück gebildet sind.

9. Fan (1) nach einem der Ansprüche 1 bis 8, wobei die Zwischenschaufelplattform (20) aus einem Verbundwerkstoff gefertigt ist, der eine durch eine Polymer-Matrix verdichtete Faserverstärkung umfasst.

## Claims

1. A fan (1) for a turbomachine having an axis of revolution (X) and comprising :
- a fan (1) disk (10) having an upstream face (12) and a radial face (14) configured to receive a series of fan (1) blades (2),
- an inter-blade platform (20) comprising an upstream end (21), a base (27) and at least one stiffener (25) extending radially from the base (27) and configured to cooperate with the fan disk (10),
- an inlet cone (40),
- a locking collar (30) cooperating with the platform, which is attached and fixed on the one hand to the upstream end (21) of the platform and on the other hand to the upstream face (12) of the fan disk (10), the locking collar (30) comprising a radial ring (31) and a lug (32), extending axially from the radial ring (31) and configured to form a radial abutment for the inlet cone (40), the fan being **characterised in that** it comprises :
- a lid (19) extending radially from the radial face (14) of the disk (10) and having a hole (11) formed therein,
the fan comprises a leg having a through hole (26) formed therein and **in that** it further comprises a pin (13) configured to engage the hole (11) formed in the lid (19) and the through hole (26) formed in the leg so as to lock the platform (20) relative to the fan disk (10).

2. A fan according to claim 1, wherein the locking collar (30) is attached to the upstream end (21) of the platform by means of a fastening system (3) which extends radially outside the lug (32).

3. A fan (1) according to one of claims 1 or 2, wherein:
- the upstream end (21) of the platform (20) comprises a wall configured to extend opposite the upstream face (12) of the fan disk (10),
- a first hole (22) is formed in the wall of the upstream end (21),
- a second hole (33) is formed in the locking collar (30), and
the fan (1) further comprises a protuberance (3) configured to enter the first hole (22) and the second hole (33) so as to lock the platform (20) to the fan (1) disk (10) via the locking collar (30).

4. A fan (1) according to claim 3, further comprising a bushing (6) housed at least partially in the first orifice (22), said bushing (6) being configured to bear against an upstream face (23) of the upstream end (21) and the protuberance (3) being housed at least partially in the bushing (6).

5. A fan (1) according to claim 4, further comprising a stop (9a) slipped onto the pin (3), said stop (9a) extending between the bushing (6) and the protuberance (3), and/or a nut (9a) slipped onto the protuberance (3), said nut (9b) being attached to the upstream end (21) of the platform (20).

6. A fan (1) according to any of claims 4 or 5, wherein a groove (24) is formed in the upstream face (23) of the upstream end (21), said groove (24) being configured to cooperate with a head of the bushing (6).

7. A fan (1) according to any of claims 1 to 6, wherein :
- the disk (10) of the fan (1) comprises an angled flange (16) having an axial leg (17) extending axially from its upstream face (12) and a radial leg (18) extending radially from the axial leg (17)
- the locking collar (30) comprises an angled wall (34) comprising an axial wall (35) extending axially from the ring (31), a radial wall (36) extending radially from the axial wall (35) and a finger (37) extending from the axial wall (35),
the finger (37) being configured to radially abut the axial leg (17) while the radial wall (36) is configured to axially abut the radial leg (18).

8. A fan (1) according to any of claims 1 to 7, wherein the base (27) and the stiffener (25) are integrally formed in one piece.

9. A fan (1) according to any of claims 1 to 8, wherein the inter-blade platform (20) is made of a composite material comprising a fibrous reinforcement densified by a polymer matrix.
